(19) Europäisches Patentamt
European Patent Office
Office européen des brevets

(11) EP 0 822 606 B1

(12) **FASCICULE DE BREVET EUROPEEN**

(45) Date de publication et mention de la délivrance du brevet:
**20.02.2002 Bulletin 2002/08**

(51) Int Cl.[7]: **H01M 4/24**, H01M 4/02, H01M 4/04

(21) Numéro de dépôt: **97401779.0**

(22) Date de dépôt: **24.07.1997**

(54) **Composition d' encre pour la fabrication d'une électrode positive, procédé de préparation, et utilisation d'un composé acide organique pour retarder la gélification de l'encre**

Zusammensetzung einer Mischung zur Herstellung einer Positivelektrode, Verfahren zur Herstellung und Verwendung einer organischer Säure zur Hemmung der Gelierung der Mischung

Composition of a mixture for the production of a positive electrode, process of preparation and the use of an organic to retard the gelification of the mixture .

(84) Etats contractants désignés:
**DE ES FI FR GB IE IT NL SE**

(30) Priorité: **02.08.1996 FR 9609799**

(43) Date de publication de la demande:
**04.02.1998 Bulletin 1998/06**

(73) Titulaire: **SAFT**
**F-93230 Romainville (FR)**

(72) Inventeurs:
- **Biensan, Philippe**
  **91360 Epinay sur Orge (FR)**
- **Simon, Bernard**
  **92130 Issey les Moulineaux (FR)**
- **Godiveau, Odile**
  **91460 Marcoussis (FR)**

(74) Mandataire: **Laroche, Danièle et al**
**COMPAGNIE FINANCIERE ALCATEL Dépt. Propriété Industrielle, 30, avenue Kléber**
**75116 Paris (FR)**

(56) Documents cités:
- **DATABASE WPI Section Ch, Week 9632 Derwent Publications Ltd., London, GB; Class A85, AN 96-314474 XP002029346 & JP 08 138 668 A (NIKKO RIKA KK) , 31 mai 1996**
- **PATENT ABSTRACTS OF JAPAN vol. 095, no. 009, 31 octobre 1995 & JP 07 161350 A (FUJI ELECTROCHEM CO LTD), 23 juin 1995,**

EP 0 822 606 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

### *Domaine de l'invention*

La présente invention a trait au domaine des électrodes positives que l'on rencontre principalement dans les accumulateurs dits au lithium.

Elle concerne plus précisément (i) une composition de matière active pour électrodes positives qui renferme un matériau à base de lithium de structure $LiM_mO_{2m}$, où $M_m$ est Ni, Co, Mn ou $Mn_2$, et qui est essentiellement dépourvue de LiOH libre, (ii) un procédé de préparation de ladite composition et de ladite matière active, et (iii) l'utilisation d'un composé acide organique pour neutraliser la base libre LiOH.

### *Art antérieur*

On sait qu'une électrode positive est formée d'un support, en général lamellaire, comportant sur ses deux faces un revêtement de matière active. Le support dénommé "collecteur de courant" ou "collecteur" par l'homme du métier, est conçu en aluminium et est électrochimiquement inerte. Le revêtement de chacune des deux faces du collecteur du courant, dénommé "matière active" ou "mélange actif" par l'homme du métier est constitué par le mélange de matières sèches (ou solides) résultant de l'élimination d'un solvant par évaporation. De façon classique, la matière active comprend trois ingrédients essentiels : (A) un matériau actif cathodique de structure $LiM_mO_{2m}$, (B) du carbone et (C) un liant ; la composition A+B+C+D, où D est le solvant, qui est utilisée pour le dépôt de la matière active A+B+C, est dénommée "encre" par l'homme du métier.

On sait que les matériaux actifs cathodiques, de structure $LiM_mO_{2m}$, pour électrodes positives les plus performants ($LiNiO_2$, $LiCoO_2$, $LiMnO_2$, $LiMn_2O_4$, etc...) sont le plus souvent préparés à partir d'un composé (oxyde de formule $M_mO_{2m-1}$, carbonate ou acétate, etc...) du métal de transition concerné et de lithine (LiOH).

Pour obtenir de bonnes performances, il était jusqu'à ce jour nécessaire d'utiliser un léger excès de lithine par rapport aux conditions stoechiométriques, c'est-à-dire qu'il fallait opérer de telle façon que le rapport molaire LiOH/$M_mO_{2m-1}$ (par exemple LiOH/NiO) soit supérieur à 1. Selon ce mode opératoire il restait dans le matériau actif cathodique, d'une part, et dans la matière active, d'autre part, une certaine quantité (en générale faible) de lithine libre qui est particulièrement gênante comme indiqué ci-après.

Le document JP-8138668 propose d'éliminer le composé du lithium en excès dans le matériau actif en utilisant un solvant adapté.

Selon, l'art antérieur, illustré notamment par la publication WO-A-92/18425, la réalisation d'une électrode par enduction d'un support conducteur (par exemple un collecteur en aluminium), à partir d'un mélange d'un matériau actif cathodique $LiM_mO_{2m}$, d'un liant polymère, d'un solvant et d'une charge conductrice pulvérulente (noir de carbone), comporte :

(a) la dissolution du liant dans le solvant,
(b) l'addition à la solution résultante du matériau actif cathodique $LiM_mO_{2m}$ et d'une charge conductrice pulvérulente,
(c) l'homogénéisation du mélange résultant,
(d) le dépôt par enduction du mélange homogène (i.e. l'encre susvisée) ainsi obtenu, sur le support, et
(e) le séchage à une température appropriée pour éliminer ledit solvant,

ou

(a') l'obtention d'un mélange du matériau actif cathodique $LiM_mO_{2m}$, de la charge conductrice pulvérulente, et du liant en poudre,
(b') l'addition du solvant au mélange résultant, puis

la mise en oeuvre des étapes (c), (d) et (e) précitées.

Or, il se trouve que l'encre obtenue à l'issue de l'étape (b) ou (b') ci-dessus prend en masse par gélification relativement rapidement, ce qui implique que l'homogénéisation de l'étape (c) est bien souvent imparfaite. Selon l'inventeur ceci serait dû à la présence de LiOH dans le mélange obtenu à l'issue de l'étape (b) ou (b') ci-dessus. En outre la présence de LiOH libre et/ou de Li libre provenant de LiOH dans le revêtement obtenu à l'issue de l'étape (e) diminue le rendement du cyclage des électrodes positives.

Le problème technique qui se pose est de retarder la gélification de l'encre afin que la durée de vie en pot (en anglais : "pot-life") de ladite encre soit augmentée et corresponde à au moins 24 h à l'air et/ou au moins 72 h à l'abri de l'air.

Dans cette optique, plusieurs solutions techniques ont été étudiées par la Demanderesse mais se sont révélées inefficaces :

- la déshydratation poussée de tous les composants de la composition de revêtement permet de retarder la gélification, mais ne résout pas le problème quand des traces d'eau (en particulier la vapeur d'eau contenue dans l'air) sont en contact avec ladite composition de revêtement ;
- le remplacement du liant, qui est en général un PDVF [i.e. poly(fluorure de vinylidène), par un copolymère de fluorure de vinylidène et d'un composé fluoré éthyléniquement insaturé (tel que l'hexafluoropropylène) est doublement insatisfaisant : en présence de LiOH libre ce type de copolymère donne des grumeaux, d'une part, et conduit à une plus mauvaise adhérence sur le support conducteur que l'homopolymère PDVF, d'autre part ; de plus ce type de copolymère étant plus soluble que ledit homopolymère PDVF, les solvants d'électrolyte provoquent des gonflements d'électrode rédhibitoires, qui se traduisent notamment par une diminution de la cohésion, une diminution de l'adhérence et des contacts intergranulaires ;
- le traitement de la lithine par $CO_2$ pour transformer LiOH libre en $Li_2CO_3$ ne convient pas car la pellicule de $Li_2CO_3$ formée et le gaz $CO_2$ bloquent le fonctionnement électrochimique de l'électrode ; et,
- la neutralisation de la lithine par un acide minéral, notamment par contact d'un composé $LiNiO_2$ (contenant LiOH libre), avec HCl gazeux conduit à la formation d'un sel de lithium (LiCl) conférant à l'ensemble support/revêtement de mauvaises performances.

***Buts de l'invention***

On se propose de fournir une nouvelle solution technique pour résoudre le problème de l'augmentation de la durée de vie en pot pour disposer d'une composition de revêtement ou encre pour la réalisation d'électrodes positives qui soit suffisamment fluide au moment de l'enduction sur le support, dès lors qu'une encre gélifiée dans sa masse ne convient pas sur le plan industriel à la technique d'enduction. L'objectif industriel recherché est de traiter un grand nombre de collecteurs, alors que les préparations "extemporanées" de la composition de revêtement pour électrodes positives ne permettent de revêtir qu'un nombre restreint de collecteur, voire aucun.
Selon un premier aspect de l'invention on se propose de mettre à disposition une nouvelle utilisation d'un moyen retardant la gélification de l'encre pour électrode positive avant enduction et séchage.
Selon un second aspect de l'invention on se propose de mettre à disposition une nouvelle composition de l'encre pour électrode positive.
Selon un troisième aspect de l'invention on se propose de mettre à disposition un nouveau procédé de préparation (i) de ladite encre et (ii) du revêtement correspondant sur un support.

***Objet de l'invention***

La nouvelle solution technique, que l'on préconise selon l'invention pour résoudre les difficultés de l'art antérieur et les inconvénients précités, repose sur l'utilisation d'un composé acide organique pour retarder la gélification de l'encre pour électrode positive.
Plus précisément selon l'invention on préconise une utilisation d'un composé acide organique pour retarder la gélification de l'encre, qui est caractérisée en ce que ledit composé acide organique est choisi parmi l'ensemble constitué par :

($\alpha$) les acides carboxyliques en $C_1$-$C_4$,
($\beta$) les acides fluorocarboxyliques en $C_2$-$C_4$,
($\gamma$) leurs anhydrides, et
($\delta$) leurs mélanges.

L'utilisation dudit composé acide organique offre l'avantage de (i) retarder la gélification de l'encre pour électrode positive et augmente donc sa durée de vie en pot, (ii) améliorer le rendement de cyclage et (iii) améliorer l'adhérence du revêtement séché sur son support.
L'encre pour électrode positive selon l'invention, qui comprend un matériau actif cathodique de structure $LiM_mO_{2m}$ où $M_m$ est Ni, Co ou Mn quand m vaut 1 ou $Mn_2$ quand m vaut 2, une charge conductrice pulvérulente, un liant polymère et un solvant, est caractérisée en ce qu'elle est essentiellement dépourvue de LiOH libre et contient un sel de lithium provenant de la réaction de la lithine initialement présente dans ledit matériau actif cathodique avec un composé acide organique choisi parmi l'ensemble constitué par :

($\alpha$) les acides carboxyliques en $C_1$-$C_4$,

(β) les acides fluorocarboxyliques en $C_2$-$C_4$,
(γ) leurs anhydrides, et
(δ) leurs mélanges.

Le procédé de préparation (i) de l'encre pour électrode positive et (ii) du revêtement constitué par les matières solides de ladite encre, qui comporte la réalisation d'un mélange constitué d'un matériau actif cathodique de structure $LiM_mO_{2m}$ où $M_m$ est Ni, Co ou Mn quand m vaut 1 ou $Mn_2$ quand m vaut 2, d'une charge conductrice pulvérulente, d'un liant polymère et d'un solvant, est caractérisé en ce qu'il comprend l'ajout d'un composé acide organique choisi parmi l'ensemble constitué par :

(α) les acides carboxyliques en $C_1$-$C_4$,
(β) les acides fluorocarboxyliques en $C_2$-$C_4$,
(γ) leurs anhydrides, et
(δ) leurs mélanges,

avant, après ou en même temps que le solvant, pour éliminer la lithine libre sous forme de sel de lithium avec ledit composé acide organique.

***Abréviations***

Par commodité, les abréviations suivantes ont été utilisées dans la présente description.

**AB** noir d'acétylène (en anglais : "acetylene black")
**CEI** composé éthyléniquement insaturé
**HFP** hexafluoropropylène (autre nomenclature : 1,1,2,3,3-hexafluoro-1-propène), de structure :

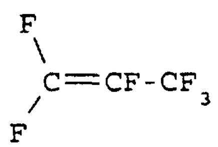

**$M_{COOH}$** teneur en composé acide organique (exprimée en mole)
**$M_{LiOH}$** teneur en lithine libre (exprimée en mole)
**$N_{COOH}$** teneur en composé acide organique (exprimée en terme de normalité), pour l'unité de volume considérée :

$$N_{COOH} = M_{COOH}/_q$$

(où q est le nombre de fonction acide carboxylique par molécule de composé acide organique, un mono-anhydride étant considéré ici comme présentant deux fonctions acides carboxyliques)
**$N_{LiOH}$** teneur en lithine libre (exprimée en terme de normalité), pour l'unité de volume considérée : $N_{LiOH} = M_{LiOH}$
**NMP** N-méthylpyrrolidone, de structure :

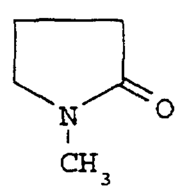

**PL** durée de vie en pot (en anglais : "pot-life")
**PVDF** poly(fluorure de vinylidène), homopolymère de structure :

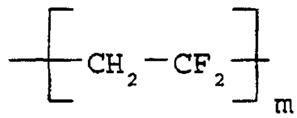

**TN** valeur dite "taux de neutralisation" exprimée en pourcentage et représentée par le rapport des quantités initialement présentes de lithine libre et de composé acide organique, qui sont mises en réaction, selon l'équation :

$$TN = 100\frac{N_{COOH}}{N_{LiOH}} = 100\frac{1}{q}\frac{M_{COOH}}{M_{LiOH}}$$

(où q est défini comme indiqué ci-dessus)

**VF2** fluorure de vinylidène (autre nomenclature 1,1-difluoroéthylène), de structure :

$$H_2C{=}CF_2$$

**VF2/HFP** copolymère de fluorure de vinylidène et d'hexafluoropropylène comprenant dans sa structure des motifs :

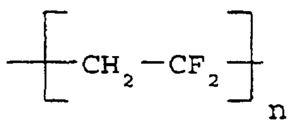 et 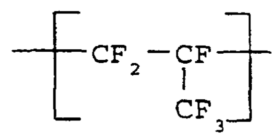

### *Description détaillée de l'invention*

Par l'expression "encre essentiellement dépourvue de LiOH libre" on entend ici une composition qui (i) ne contient pas de LiOH, d'hydrate $LiOH.H_2O$, d'oxyde $Li_2O$ (susceptible de se transformer en LiOH ou $LiOH.H_2O$ en présence de l'humidité de l'air) ni de Li libre provenant de LiOH, ou (ii) ne contient que de très faibles traces de LiOH, $LiOH.H_2O$ ou $Li_2O$ (environ moins de 50 ppm et mieux une quantité inférieure ou égale à 10 voire 1 ppm en poids par rapport au poids du matériau actif cathodique $LiM_mO_{2m}$) ou de Li libre provenant de LiOH.

Par l'expression "éliminer substantiellement la présence de LiOH", on entend eu égard à ce qui précède le fait (i) de supprimer tout le LiOH, $LiOH.H_2O$ ou $Li_2O$ libre (ainsi que le Li provenant de LiOH), ou (ii) de réduire la teneur en LiOH, $LiOH.H_2O$ ou $Li_2O$ libre (et celle du Li libre qui en découle) à une valeur environ inférieure à 50 ppm et mieux inférieure ou égale à 10 voire 1 ppm par rapport au poids du matériau actif cathodique $LiM_mO_{2m}$.

Le composé acide organique, qui est comme indiqué ci-dessus une substance organique choisie parmi l'ensemble constitué par les acides carboxyliques en $C_1$-$C_4$, les acides fluorocarboxyliques en $C_2$-$C_4$, leurs anhydrides, et leurs mélanges, donne après réaction avec la lithine un sel de lithium qui ne perturbe pas le fonctionnement ultérieur de l'électrode, en particulier sous la forme finale d'accumulateur.

Parmi les acides carboxyliques qui conviennent à cet effet, on peut notamment mentionner (i) les acides monocarboxyliques en $C_1$-$C_4$ de structure $R_1COOH$ où $R_1$ est H ou alkyle en $C_1$-$C_3$, tels que HCOOH, $CH_3COOH$, $CH_3CH_2COOH$, $(CH_3)_2CHCOOH$, et (ii) les acides polycarboxyliques en $C_2$-$C_4$, en particulier les diacides tels que HOOC-COOH, HOOC-$CH_2$-COOH et HOOC-$CH_2CH_2$-COOH.

Parmi les acides fluorocarboxyliques en $C_2$-$C_4$ qui conviennent selon l'invention, on peut notamment mentionner les acides fluoromonocarboxyliques et fluoropolycarboxyliques qui dérivent des acides précédents par le remplacement d'au moins un atome d'hydrogène, dans une liaison C-H, par un atome de fluor, en particulier les monoacides et diacides $CH_2FCOOH$, $CHF_2COOH$, $CF_3COOH$, $CF_3CH_2COOH$, HOOC-$CF_2$-COOH. De façon pratique, on préférera, parmi les acides fluorocarboxyliques, les acides perfluorés.

Parmi les anhydrides qui conviennent selon l'invention on peut notamment mentionner les anhydrides "normaux" obtenus à partir d'un même monoacide, les anhydrides mixtes obtenus à partir de deux monoacides différents et les anhydrides cycliques obtenus à partir d'un même diacide. Parmi ces anhydrides on préfère l'anhydride acétique.

De façon avantageuse le composé acide organique selon l'invention sera choisi de préférence parmi l'acide

oxalique (HOOC-COOH), l'acide formique (HCOOH), l'anhydride acétique et surtout l'acide acétique ($CH_3COOH$) ou l'acide trifluoroacétique ($CF_3COOH$).

Le matériau actif cathodique est un produit obtenu par réaction de LiOH (en excès par rapport aux conditions stoechiométriques comme indiqué ci-dessus) avec un oxyde de métal de transition de formule $M_mO_{2m-1}$, (où notamment $M_m$ est Ni, Co, Mn ou $Mn_2$) ou un sel (notamment carbonate ou acétate) dudit métal de transition. Ledit matériau actif cathodique répond approximativement à la formule $LiM_mO_{2m}$ et contient eu égard à son mode de préparation de la lithine libre ou du $Li_2O$ libre susceptible de donner LiOH et/ou $LiOH.H_2O$ par hydrolyse.

Le liant polymère utile selon l'invention peut être tout liant convenant à la réalisation d'une enduction sur un support conducteur destiné à intervenir dans la fabrication d'accumulateurs. Il s'agit principalement d'un produit obtenu par polymérisation ou copolymérisation d'un monomère (éventuellement halogéné, de préférence fluoré) éthyléniquement insaturé.

De préférence ce liant est préparé à partir d'au moins un monomère, le VF2. Il est soit un homopolymère PVDF soit un copolymère VF2/CEI où CEI peut être halogéné et mieux fluoré. A titre d'exemple le CEI monomère peut répondre à la formule :

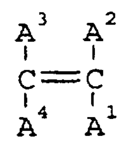

où $A^1$, $A^2$, $A^3$ et $A^4$, identiques ou différents, représentent chacun H, F, alkyle en C1-C4 ou fluoroalkyle en $C_1$-$C_4$.

Les monomères CEIs préférés selon l'invention sont ceux dans lesquels $A^1 = CF_3$ ou $CF_3CF_2$, $A^2 = A^3 = F$ et $A^4 = F$ ou $CF_3$, c'est-à-dire des composés éthyléniquement insaturés perfluorés. Le CEI le plus intéressant selon l'invention est HFP.

Le liant selon l'invention sera de façon particulièrement avantageuse choisi parmi l'ensemble constitué par l'homopolymère PVDF, le copolymère VF2/HFP (leurs structures sont données ci-dessus) et leurs mélanges. PVDF et VF2/HFP interviennent ici comme liants servant à stabiliser la structure du revêtement final après séchage.

Comme solvant du liant polymère, qui est utile selon l'invention, on peut faire appel à toute substance connue pour solubiliser le liant de l'encre pour électrodes positives. Les solvants que l'on préfère ici sont ceux qui (i) ont un point d'ébullition se situant entre environ 100 °C et environ 200 °C sous pression atmosphérique (environ $10^5$Pa), et (ii) ne réagissent pas ou qui réagissent peu avec les autres ingrédients de l'encre pour électrodes positives, et avec le support conducteur qui est ensuite enduit au moyen de ladite encre. A titre d'exemple, on peut utiliser comme solvants ceux qui répondent à la formule :

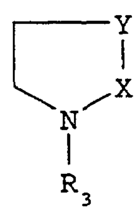

dans laquelle $R_3$ est $CH_3$, et l'un des X et Y est C=O et l'autre est $CH_2$ ou $CH_2CH_2$, les solvants préférés selon l'invention étant la N-méthyl-2-pipéridone ($R_3 = CH_3$, X = CO, et Y = $CH_2CH_2$) et surtout la N-méthyl-2-pyrrolidone ou NMP ($R_3 = CH_3$, X = CO, et Y = $CH_2$).

La charge pulvérulente conductrice selon l'invention a une faible granulométrie (notamment une granulométrie inférieure à 50 µm, de préférence inférieure ou égale à 20 µm et mieux comprise entre environ 15 µm et 0,3 µm) et est constituée de carbone. Cette charge pulvérulente conductrice peut être du graphite, du noir de carbone, du noir d'acétylène (AB), de la suie ou l'un de leurs mélanges.

De façon avantageuse selon l'invention, la charge pulvérulente conductrice sera constituée par un mélange graphite/AB selon un rapport pondéral 4/1 à 1/4.

Selon l'invention, comme indiqué plus haut, l'encre pour électrode positive renferme en association avec

(1) le mélange de base constitué par

(A) le matériau actif cathodique,
(B) la charge pulvérulente conductrice,
(C) le liant polymère, et
(D) le solvant dudit liant,

(2) le sel de lithium résultant de la réaction

(E) du composé acide organique

avec la lithine libre présente dans ledit matériau actif cathodique, de façon que ladite encre soit essentiellement dépourvue de lithine libre.

Ledit composé acide organique est introduit dans ledit mélange de base, avant, après ou en même temps que le solvant du liant, selon une quantité telle que le taux de neutralisation (TN), exprimé en pourcentage et donné par la relation :

$$TN = 100\frac{1}{q}\ \frac{M_{COOH}}{M_{LiOH}} \qquad (I)$$

où

$M_{LiOH}$ est la teneur en lithine libre initialement présente, exprimée en mole,
$M_{COOH}$ est la teneur en composé acide organique, exprimée en mole, et
q est le nombre de fonction acide carboxylique par molécule dudit composé acide organique,

soit supérieur ou égal à 50 % et de préférence compris entre 100 et 150 %.

La relation I susvisée est équivalente à la relation

$$TN = 100\frac{N_{COOH}}{N_{LiOH}} \qquad (II)$$

donnée ci-dessus dans la liste des abréviations.

Quand 100 % ≤ TN et mieux quand 100 % ≤ TN ≤ 150 %, on élimine de l'encre pour électrodes positives toute la lithine libre qui provient du matériau actif cathodique, d'une part, et obtient une composition dont la prise en masse par gélification est retardée eu égard aux valeurs

PL ≥ 24 h à l'air, et
PL ≥ 72 h à l'abri de l'air,

d'autre part.

L'encre pour électrodes positives selon l'invention convient pour l'enduction de supports conducteurs en ce sens qu'elle est suffisamment fluide pour s'écouler par gravité. Sa consistance va de celle du sirop à celle d'une pâte fluide. De façon pratique, ladite composition aura, sous pression atmosphérique (environ $10^5$Pa) et à température ambiante (15-25°C), une viscosité inférieure à 300 Pa.s (300 000 cPs), notamment une viscosité comprise entre 2 et 20 Pa.s (2 000 - 20 000 cPs) et mieux une viscosité comprise entre 5 et 7 Pa.s (5 000 - 7 000 cPs).

De façon avantageuse, l'encre (i.e. la composition de revêtement) selon l'invention pourra renfermer

(1) pour 100 parties en poids de matière active A+B+C :

(A) 85 à 96 parties en poids de matériau actif cathodique de structure $LiM_mO_{2m}$ où $M_m$ est Ni, Co ou Mn quand m vaut 1, ou $Mn_2$ quand m vaut 2,
(B) 8 à 1 parties en poids de charge pulvérulente conductrice constituée par du carbone et de préférence par un mélange graphite/AB (de 4/1 à 1/4 ; p/p),
(C) 7 à 3 parties en poids de liant polymère préparé à partir du monomère VF2, ledit liant étant PVDF ou VF2/HFP, et
(D) un solvant dudit liant, de préférence NMP, en quantité telle que le rapport pondéral D/A+B+C+D soit compris entre 0,3 et 0,7 et

(2) le sel résultant de la réaction de la lithine libre avec

(E) ledit composé acide organique intervenant selon une quantité correspondant à un TN supérieur ou égal à 50 % et mieux de 100 à 150 %.

La teneur en solvant du liant dans la composition de revêtement n'est pas essentiellement critique, et comme il suffit d'utiliser une quantité de solvant la plus faible possible eu égard à PL, à la consistance souhaitée et à la limitation de la consommation d'énergie pour l'évaporation dudit solvant, on recommande en variante une composition qui renferme

(1) pour le mélange de base A+B+C+D :

(A) au moins 86 % en poids, par rapport au poids du mélange A+B+C, de matériau actif cathodique de structure $LiM_mO_{2m}$ où $M_m$ est Ni, Co ou Mn quand m vaut 1, ou $Mn_2$ quand m vaut 2,
(B) au plus 8 % en poids, par rapport au poids du mélange A+B+C, de charge pulvérulente conductrice constituée par du carbone et de préférence par un mélange graphite/AB (de 4/1 à 1/4 ; p/p),
(C) au plus 6% en poids, par rapport au poids du mélange A+B+C, de liant polymère préparé à partir de VF2, ledit liant étant PVDF ou VF2/HFP, et
(D) le solvant dudit liant, de préférence NMP, en quantité suffisante pour que le mélange A+B+C+D+E ait une viscosité comprise entre 2 et 20 Pa.s, de préférence une viscosité comprise entre 5 et 7 Pa.s, sous pression atmosphérique et à température ambiante, et

(2) le sel résultant de la réaction de la lithine libre avec

(E) ledit composé acide organique intervenant selon une quantité correspondant à un TN supérieur ou égal à 50 % et mieux de 100 à 150 %.

Selon l'invention, il est plutôt préférable que la teneur en A, le matériau actif cathodique, soit supérieure ou égale à 86 % en poids par rapport au poids du mélange A+B+C afin de minimiser l'influence des composants électrochimiquement non actifs que sont B et C lors du fonctionnement en tant qu'accumulateur dudit support enduit sur ses deux faces puis enroulé sur lui-même.

Le procédé de préparation (i) de l'encre pour électrodes positives et (ii) du revêtement correspondant de matière active comprend :

(i) pour l'obtention de l'encre :

- d'une part

(a) la dissolution du liant dans le solvant avec le composé acide organique,
(b) l'addition à la solution résultante du matériau actif cathodique $LiM_mO_{2m}$ et d'une charge conductrice pulvérulente,
(c) l'homogénéisation du mélange résultant, ou

- d'autre part

(a') l'obtention d'un mélange du matériau actif cathodique $LiM_mO_{2m}$, de la charge conductrice pulvérulente et du liant en poudre,
(b') l'addition du composé acide organique avant, en même temps que ou immédiatement après le solvant au mélange résultant, et
(c) l'homogénéisation du mélange résultant, puis

(ii) pour l'obtention du revêtement de matière active :

(d) le dépôt par enduction du mélange homogène (i.e. l'encre) ainsi obtenu, sur le support, et
(e) le séchage à une température de 100 à 200°C pour éliminer ledit solvant,

de façon que ladite composition et par suite ledit revêtement soient dépourvus de lithine libre et de lithium libre provenant de ladite lithine.

Le meilleur mode de mise en oeuvre du procédé de l'invention consiste pour l'obtention de ladite composition à préparer un mélange de :

(A) 86 % en poids de matériau actif cathodique, par rapport au poids du mélange A+B+C,
(B) 8 % en poids de charge pulvérulente conductrice, par rapport au poids du mélange A+B+C, constituée par un mélange graphite/AB (1/1; p/p),
(C) 6 % en poids de liant polymère, par rapport au poids du mélange A+B+C, ledit liant étant PVDF ou VF2/HFP, à incorporer dans le mélange résultant
(D) le solvant dudit liant polymère, de préférence NMP, et
(E) ledit composé acide organique, ledit composé acide organique étant utilisé selon une quantité correspondant à un TN de 100 à 150 % et incorporé en même temps que le solvant du polymère, ledit solvant étant utilisé selon une quantité telle que le mélange A+B+C+D+E ait une consistance sirupeuse (2-20 Pa.s).

D'autres avantages et caractéristiques de l'invention seront mieux compris à la lecture qui va suivre d'exemples de réalisation et de résultats d'essais comparatifs. Bien entendu l'ensemble de ces éléments n'est pas limitatif mais est donné à titre d'illustration.

***Exemple 1***

On prépare une "encre" de consistance pâteuse mais suffisamment fluide pour s'écouler par gravité, selon les modalités du meilleur mode ci-dessus, à partir de

(A) 86 % en poids, par rapport au poids du mélange A+B+C, de $LiNiO_2$ [contenant 0,3 millimole de LiOH libre par mole de LiOH],
(B) 8 % en poids, par rapport au poids du mélange A+B+C, de charge pulvérulente conductrice constituée par un mélange graphite/AB (1/1 ; p/p),
(C) 6 % en poids, par rapport au poids du mélange A+B+C, de PVDF,
(D) NMP jusqu'à obtention de la consistance d'un sirop épais (5 Pa.s), et
(E) $CH_3COOH$ en quantité suffisante pour un TN de 150 %

L'encre ainsi obtenue est enduite sur les deux faces d'un collecteur de courant qui est un feuillard d'aluminium de 20 μm d'épaisseur. L'électrode ainsi obtenue est alors séchée à une température permettant l'élimination complète du solvant comprise entre 100°C et 180°C, de préférence entre 120°C et 150°C. L'électrode est ensuite comprimée de telle sorte que l'épaisseur finale de la pâte déposée sur chaque face soit comprise entre 50 μm et 400 μm, par exemple 90 μm à 100 μm. L'électrode terminée a alors par exemple une épaisseur totale comprise entre 200 et 220 μm. Elle est alors utilisée comme électrode positive d'accumulateur.

En variante, on peut enduire une première face du collecteur, sécher pour évaporer NMP, puis enduire la seconde face et sécher à nouveau. L'électrode est ensuite comprimée (calandrée) pour obtenir l'épaisseur souhaitée.

***Autres exemples***

D'autres exemples selon l'invention (Ex 2 à Ex 4) et produits de comparaison (CP1-CP2) ont été préparés selon les modalités opératoires décrites à l'exemple 1 ci-dessus en faisant varier TN (i.e. la quantité de composé acide organique utilisée) et la nature du liant polymère (PVDF ou VF2/HFP). Ces exemples et produits de comparaison sont donnés dans le tableau I ci-après.

***Essais I - PL***

On a évalué les valeurs PL des compositions de revêtement Ex 1-Ex 4 et CP1-CP2. Les résultats obtenus consignés dans le tableau I mettent en évidence que l'ajout d'un composé acide organique augmente la durée de vie en pot des encres selon l'invention.

TABLEAU I

| Produit | A | Liant | TN | PL |
|---|---|---|---|---|
| Ex 1 | a | PVDF | 150 % | > 200 h |
| Ex 2 | b | VF2/HFP | 100 % | 30 h |

TABLEAU I (suite)

| Produit | A | Liant | TN | PL |
|---|---|---|---|---|
| Ex 3 | b | VF2/HFP | 75 % | 26 h |
| Ex 4 | b | VF2/HFP | 50 % | 14 h |
| CP1 | a | PVDF | 0 % | « 1 h |
| CP2 | a | VF2/HFP | 0 % | 1 h |

Notes
A : mode de conservation de la composition
(a) à l'air
(b) à l'abri de l'air

***Essais II - Adhérence***

Sur les électrodes on a évalué la résistance au pelage de façon à apprécier l'adhérence sur une face des compositions enduites. Les résultats obtenus sont consignés dans le tableau II ci-après. On constate de façon surprenante que l'ajout d'un composé acide organique augmente l'adhérence.

TABLEAU II

| Produit | Liant | TN | Adhérence (MPa) |
|---|---|---|---|
| Ex 1 | PVDF | 150 % | 1-2 |
| CP1 | PVDF | 0 % | 0,5-0,7 |

***Essais II - Rendement de cyclage-***

Les électrodes obtenues ont été utilisées pour monter des boutons à anode de lithium (agencement $Li/LiNiO_2$) et ceux-ci ont été cyclés entre 3 et **4,1 V**. Le rendement de cyclage, mesuré par le rapport entre la capacité chargée et la capacité déchargée lors du même cycle, a été déterminé. Les résultats consignés dans le tableau III ci-après montrent que l'ajout d'un composé acide organique améliore le rendement de cyclage

TABLEAU III

| Produit | Liant | TN | Rendement de cyclage charge/décharge (%) |
|---|---|---|---|
| Ex 1 | PVDF | 150 % | 99,5-99,9 |
| CP2 | VF2/HFP | 0 % | 98-99 |
| CP1 | PVDF | 0 % | 98-99 |

**Revendications**

**1.** Composition d'encre pour la fabrication d'une électrode positive comprenant (A) un matériau actif cathodique de structure $LiM_mO_{2m}$ où $M_m$ est Ni, Co, Mn quand m vaut 1 ou $Mn_2$ quand m vaut 2, (B) une charge conductrice pulvérulente, (C) un liant polymère et (D) un solvant, **caractérisée en ce qu'**elle est essentiellement dépourvue de lithine (LiOH) libre et contient un sel de lithium provenant de la réaction de la lithine initialement présente dans ledit matériau actif cathodique avec (E) un composé acide organique choisi parmi l'ensemble constitué par :

(α) les acides carboxyliques en $C_1$-$C_4$,
(β) les acides fluorocarboxyliques en $C_2$-$C_4$,
(γ) leurs anhydrides, et
(δ) leurs mélanges.

**2.** Composition d'encre selon la revendication 1, dans laquelle la teneur en lithine (LiOH) libre est inférieure à 50ppm par rapport au poids dudit matériau actif cathodique.

3. Composition d'encre selon la revendication 2, dans laquelle la teneur en lithine (LiOH) libre est inférieure ou égale à 10ppm par rapport au poids dudit matériau actif cathodique.

4. Composition d'encre selon la revendication 3, dans laquelle la teneur en lithine (LiOH) libre est inférieure ou égale à 1ppm par rapport au poids dudit matériau actif cathodique.

5. Composition d'encre selon l'une des revendications précédentes, qui renferme en association avec

(1) le mélange de base constitué par :

(A) le matériau actif cathodique,
(B) la charge pulvérulente conductrice,
(C) le liant polymère, et
(D) le solvant dudit liant,

(2) le sel de lithium résultant de la réaction

(E) du composé acide organique

avec la lithine (LiOH) libre présente dans ledit matériau actif cathodique, de façon que ladite composition d'encre soit essentiellement dépourvue de lithine libre,
ledit composé acide organique ayant été utilisé selon une quantité telle que le taux de neutralisation (TN), exprimé en pourcentage et donné par la relation :

$$TN = 100\frac{1}{q}\ \frac{M_{COOH}}{M_{LiOH}}$$

où

$M_{LiOH}$ est la teneur en lithine libre initialement présente, exprimée en mole,
$M_{COOH}$ est la teneur en composé acide organique, exprimée en mole, et
q est le nombre de fonction acide carboxylique par molécule dudit composé acide organique,

soit supérieur ou égal à 50 %.

6. Composition d'encre selon la revendication 5, dans laquelle le taux de neutralisation (TN) est supérieur ou égal à 100%.

7. Composition d'encre selon la revendication 6, dans laquelle le taux de neutralisation (TN) est compris entre 100 et 150%.

8. Composition d'encre selon l'une des revendications précédentes, dans laquelle ledit composé acide organique est un acide monocarboxylique en $C_1$-$C_4$ ou un acide polycarboxylique en $C_2$-$C_4$.

9. Composition d'encre selon l'une des revendications 1 à 7, dans laquelle ledit composé acide organique est un acide fluoromonocarboxylique en $C_2$-$C_4$ ou un acide fluoropolycarboxylique en $C_2$-$C_4$.

10. Composition d'encre selon la revendication 9, dans laquelle ledit composé acide organique est perfluoré.

11. Composition d'encre selon l'une des revendications 1 à 7, dans laquelle ledit composé acide organique est choisi parmi l'acide oxalique, l'acide formique et l'anhydride acétique.

12. Composition d'encre selon l'une des revendications 1 à 7, dans laquelle ledit composé acide organique est l'acide acétique ou l'acide trifluoroacétique.

13. Composition d'encre selon l'une des revendications précédentes, dans laquelle ledit liant est un polymère ou un copolymère d'au moins un monomère éthyléniquement insaturé.

**14.** Composition d'encre selon la revendication 13, dans laquelle ledit composé monomère éthyléniquement insaturé est halogéné.

**15.** Composition d'encre selon l'une des revendications 13 et 14, dans laquelle ledit liant est un polymère ou un copolymère d'au moins un monomère qui est le fluorure de vinylidène ($VF_2$).

**16.** Composition d'encre selon la revendication 15, dans laquelle ledit liant est choisi parmi l'ensemble constitué par

- un homopolymère poly(fluorure de vinylidène) (PVDF),
- un copolymère fluorure de vinylidène/composé monomère halogéné éthyléniquement insaturé, et
- leurs mélanges.

**17.** Composition d'encre selon la revendication 16, dans laquelle ledit composé monomère halogéné éthyléniquement insaturé est fluoré et répond à la formule :

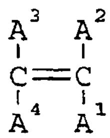

où $A^1$, $A^2$, $A^3$ et $A^4$, identiques ou différents, représentent chacun H, F, alkyle en $C_1$-$C_4$ ou fluoroalkyle en $C_1$-$C_4$.

**18.** Composition d'encre selon la revendication 17, dans laquelle $A^1 = CF_3$ ou $CF_3CF_2$, $A^2 = A^3 = F$ et $A^4 = F$ ou $CF_3$.

**19.** Composition d'encre selon l'une des revendications 16 à 18, dans laquelle ledit composé monomère halogéné éthyléniquement insaturé est l'hexafluoropropylène (HFP).

**20.** Composition d'encre selon l'une des revendications précédentes, dans laquelle ledit solvant répond à la formule :

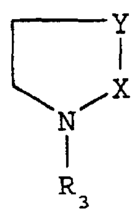

dans laquelle $R_3$ est $CH_3$, et l'un des X et Y est C=O et l'autre est $CH_2$ ou $CH_2CH_2$.

**21.** Composition d'encre selon la revendication 20, dans laquelle ledit solvant est la N-méthylpyrrolidone (NMP).

**22.** Composition d'encre selon l'une des revendications précédentes, dans laquelle ladite charge pulvérulente conductrice est choisie parmi le graphite, le noir de carbone, le noir d'acétylène (AB), la suie ou l'un de leurs mélanges.

**23.** Composition d'encre selon l'une des revendications précédentes, qui renferme :

(1) pour 100 parties en poids de matière active A+B+C,

(A) 85 à 96 parties en poids de matériau actif cathodique de structure $LiM_mO_{2m}$ où $M_m$ est Ni, Co ou Mn quand m vaut 1, ou $Mn_2$ quand m vaut 2,
(B) 8 à 1 parties en poids de charge pulvérulente conductrice,
(C) 7 à 3 parties en poids de liant polymère, et
(D) un solvant dudit liant, en quantité telle que le rapport pondéral D/A+B+C+D soit compris entre 0,3 et 0,7 et

(2) le sel résultant de la réaction de la lithine (LiOH) libre avec

(E) ledit composé acide organique intervenant selon une quantité correspondant à un taux de neutralisation (TN) supérieur ou égal à 50 %.

**24.** Composition d'encre selon l'une des revendications 1 à 22, qui renferme :

(1) pour le mélange de base A+B+C+D :

(A) au moins 86% en poids, par rapport au poids du mélange A+B+C, de matériau actif cathodique de structure $LiM_mO_{2m}$ où $M_m$ est Ni, Co ou Mn quand m vaut 1, ou $Mn_2$ quand m vaut 2,
(B) au plus 8% en poids, par rapport au poids du mélange A+B+C, de charge pulvérulente conductrice,
(C) au plus 6% en poids, par rapport au poids du mélange A+B+C, de liant polymère, et
(D) le solvant dudit liant en quantité suffisante pour que le mélange A+B+C+D+E ait une viscosité comprise entre 2 et 20 Pa.s sous pression atmosphérique et à température ambiante, et

(2) le sel résultant de la réaction de la lithine libre avec

(E) ledit composé acide organique intervenant selon une quantité correspondant à un TN supérieur ou égal à 50 %.

**25.** Composition d'encre selon la revendication 24, dans laquelle ledit solvant est utilisé en quantité suffisante pour que le mélange A+B+C+D+E ait une viscosité comprise entre 5 et 7 Pa.s sous pression atmosphérique et à température ambiante.

**26.** Composition d'encre selon l'une des revendications 23 à 25, dans laquelle ladite charge pulvérulente conductrice est un mélange graphite/noir d'acétylène (AB) selon un rapport pondéral 4/1 à 1/4.

**27.** Composition d'encre selon l'une des revendications précédentes, qui présente une durée de vie en pot supérieure ou égale à 24 h à l'air.

**28.** Composition d'encre selon l'une des revendications précédentes, qui présente une durée de vie en pot supérieure ou égale à 72 h à l'abri de l'air.

**29.** Procédé de fabrication d'une électrode positive comportant la préparation d'une composition d'encre comprenant la réalisation d'un mélange de base constitué (A) d'un matériau actif cathodique de structure $LiM_mO_{2m}$ où $M_m$ est Ni, Co, Mn quand m vaut 1 ou $Mn_2$ quand m vaut 2, (B) d'une charge conductrice, (C) d'un liant polymère et (D) d'un solvant, **caractérisé en ce qu'**il comprend l'ajout (E) d'un composé acide organique choisi parmi l'ensemble constitué par :

($\alpha$) les acides carboxyliques en $C_1$-$C_4$,
($\beta$) les acides fluorocarboxyliques en $C_2$-$C_4$,
($\gamma$) leurs anhydrides, et
($\delta$) leurs mélanges,

avant, après, ou en même temps que le solvant.

**30.** Procédé selon la revendication 29, comprenant

(i) pour l'obtention de ladite encre :

- d'une part

(a) la dissolution du liant dans le solvant avec le composé acide organique,
(b) l'addition à la solution résultante du matériau actif cathodique $LiM_mO_{2m}$ et d'une charge conductrice pulvérulente,
(c) l'homogénéisation du mélange résultant, ou

- d'autre part

(a') l'obtention d'un mélange du matériau actif cathodique $LiM_mO_{2m}$, de la charge conductrice pulvérulente, et du liant en poudre,
(b') l'addition du composé acide organique avant, en même temps que ou immédiatement après le solvant, au mélange résultant, et
(c) l'homogénéisation du mélange résultant, puis

(ii) pour l'obtention du revêtement de matière active :

(d) le dépôt par enduction de du mélange homogène ainsi obtenu, sur le support, et
(e) le séchage à une température de 100 à 200°C pour éliminer ledit solvant.

**31.** Procédé selon l'une des revendications 29 et 30, comprenant la préparation d'un mélange de :

(A) 86 % en poids de matériau actif cathodique, par rapport au poids du mélange A+B+C,
(B) 8 % en poids de charge pulvérulente conductrice, par rapport au poids du mélange A+B+C,
(C) 6 % en poids de liant polymère, par rapport au poids du mélange A+B+C, ledit liant étant l'homopolymère PVDF ou le copolymère VF2/HFP,
puis l'incorporation dans le mélange résultant :
(D) du solvant dudit liant polymère, et
(E) dudit composé acide organique, ledit composé acide organique étant utilisé selon une quantité correspondant à un taux de neutralisation (TN) de 100 à 150% et incorporé en même temps que le solvant du polymère selon une quantité telle que le mélange A+B+C+D+E ait une viscosité de 2-20 Pa s, sous pression atmosphérique et à température ambiante.

**32.** Procédé selon la revendication 31, dans lequel ledit solvant est la N-méthylpyrolidone (NMP).

**33.** Utilisation d'un composé acide organique pour retarder la gélification d'une encre pour la fabrication d'une électrode positive, ledit composé acide organique étant choisi parmi l'ensemble constitué par :

(α) les acides carboxyliques en $C_1$-$C_4$,
(β) les acides fluorocarboxyliques en $C_2$-$C_4$,
(γ) leurs anhydrides, et
(δ) leurs mélanges.

**Patentansprüche**

**1.** Tintenzusammensetzung zur Herstellung einer positiven Elektrode mit (A) einem aktiven Kathodenmaterial der Struktur $LiM_mO_{2m}$, worin $M_m$ Ni, Co, Mn ist, wenn m 1 beträgt, oder $Mn_2$ ist, wenn m 2 beträgt, (B) einem leitfähigen pulverigen Füllstoff, (C) einem Polymerbindemittel und (D) einem Lösungsmittel, **dadurch gekennzeichnet, dass** sie im wesentlichen kein freies Lithin (LiOH) aufweist, und ein Lithiumsalz enthält, das aus der Reaktion des anfänglich in dem aktiven Kathodenmaterial vorliegenden Lithin mit (E) einer organischen Säure, gewählt aus der Gruppe bestehend aus:

(α) Carboxylsäuren mit $C_1$-$C_4$,
(β) Fluorocarboxylsäuren mit $C_2$-$C_4$,
(γ) deren Anhydride,
(δ) deren Mischungen

stammt.

**2.** Tintenzusammensetzung nach Anspruch 1, bei welcher der Gehalt an freiem Lithin (LiOH) unterhalb von 50 ppm in Bezug auf das Gewicht des aktiven Kathodenmaterials liegt.

**3.** Tintenzusammensetzung nach Anspruch 2, bei welcher der Gehalt an freiem Lithin (LiOH) kleiner oder gleich 10 ppm in Bezug auf das Gewicht des aktiven Kathodenmaterials ist.

**4.** Tintenzusammensetzung nach Anspruch 3, bei welcher der Gehalt an freiem Lithin (LiOH) kleiner oder gleich 1 ppm in Bezug auf das Gewicht des aktiven Kathodenmaterials ist.

**5.** Tintenzusammensetzung nach einem der vorhergehenden Ansprüche, welche in Verbindung mit

(1) der Grundmischung, gebildet aus:

(A) dem aktiven Kathodenmaterial
(B) dem pulverigen leitfähigen Füllstoff
(C) dem Polymerbindemittel, und
(D) dem Lösungsmittel des Bindemittels,

(2) das Lithiumsalz enthält, das sich aus der Reaktion der

(E) organischen Säure

mit dem in dem aktiven Kathodenmaterial vorliegenden freien Lithin (LiOH) ergibt, so dass die Tintenzusammensetzung im wesentlichen kein freies Lithin aufweist,
wobei die organische Säure in einer solchen Menge verwendet wurde, dass der Neutralisationsgrad (TN), ausgedrückt in Prozent und gegeben durch die Beziehung:

$$TN = 100\frac{1}{q}\frac{M_{COOH}}{M_{LiOH}}$$

worin

$M_{LiOH}$ der Gehalt an anfänglich vorliegendem freien Lithin, ausgedrückt in Mol,
MCOOH der Gehalt an organischer Säure, ausgedrückt in Mol, und
q die Carboxylsäurefunktionszahl pro Molekül der organischen Säure ist,
größer oder gleich 50% ist.

**6.** Tintenzusammensetzung nach Anspruch 5, bei welcher der Neutralisationsgrad (TN) größer oder gleich 100% ist.

**7.** Tintenzusammensetzung nach Anspruch 6, bei welcher der Neutralisationsgrad (TN) zwischen 100 und 150% liegt.

**8.** Tintenzusammensetzung nach einem der vorhergehenden Ansprüche, bei welcher die organische Säure eine Monocarboxylsäure mit $C_1$-$C_4$ oder eine Polycarboxylsäure mit $C_2$-$C_4$ ist.

**9.** Tintenzusammensetzung nach einem der Ansprüche 1 bis 7, bei welcher die organische Säure eine Fluormonocarboxylsäure mit $C_2$-$C_4$ oder eine Fluorpolycarboxylsäure mit $C_2$-$C_4$ ist.

**10.** Tintenzusammensetzung nach Anspruch 9, bei welcher die organische Säure perfluoriert ist.

**11.** Tintenzusammensetzung nach einem der Ansprüche 1 bis 7, bei welcher die organische Säure aus Oxalsäure, Ameisensäure und Essigsäureanhydrid gewählt ist.

**12.** Tintenzusammensetzung nach einem der Ansprüche 1 bis 7, bei welcher die organische Säure Essigsäure oder Trifluoressigsäure ist.

**13.** Tintenzusammensetzung nach einem der vorhergehenden Ansprüche, bei welcher das Bindemittel ein Polymer oder ein Kopolymer wenigstens eines ethylenisch ungesättigten Monomers ist.

**14.** Tintenzusammensetzung nach Anspruch 13, bei welcher das ethylenisch ungesättigte Monomer halogeniert ist.

**15.** Tintenzusammensetzung nach einem der Ansprüche 13 und 14, bei welcher das Bindemittel ein Polymer oder ein Kopolymer wenigstens eines Monomers, nämlich des Vinylidenfluorids (VF2) ist.

**16.** Tintenzusammensetzung nach Anspruch 15, bei welcher das Bindemittel aus der Gruppe, bestehend aus

- einem Poly(vinylidenfluorid)-Homopolymer (PVDF),
- einem Vinylidenfluorid-Kopolymer/ethylenisch ungesättigtem, halogeniertem Monomer, und
- Mischungen daraus

gewählt ist.

**17.** Tintenzusammensetzung nach Anspruch 16, bei welcher das ethylenisch ungesättigte, halogenierte Monomer fluoriert ist und der Formel:

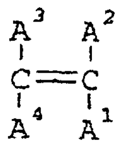

genügt, worin $A^1$, $A^2$, $A^3$ und $A^4$ gleich oder verschieden sind und jeweils H, F, Alkyl mit $C_1$-$C_4$ oder Fluoralkyl mit $C_1$-$C_4$ darstellen.

**18.** Tintenzusammensetzung nach Anspruch 17, bei welcher $A^1 = CF_3$ oder $CF_3CF_2$, $A^2 = A^3 = F$ und $A^4 = F$ oder $CF_3$ ist.

**19.** Tintenzusammensetzung nach einem der Ansprüche 16 bis 18, bei welcher das ethylenisch ungesättigte, halogenierte Monomer Hexafluorpropylen (HFP) ist.

**20.** Tintenzusammensetzung nach einem der vorhergehenden Ansprüche, bei welcher das Lösungsmittel der Formel genügt:

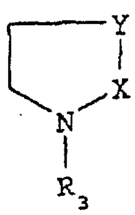

worin $R_3$ $CH_3$ ist, und entweder X oder Y C=O und das andere $CH_2$ oder $CH_2CH_2$ ist.

**21.** Tintenzusammensetzung nach Anspruch 20, bei welcher das Lösungsmittel N-Methylpyrrolidon (NMP) ist.

**22.** Tintenzusammensetzung nach einem der vorhergehenden Ansprüche, bei welcher der pulverige, leitfähige Füllstoff aus Graphit, Kohlenschwarz, Acetylenschwarz (AB), dem Ruß oder einer deren Mischungen gewählt ist.

**23.** Tintenzusammensetzung nach einem der vorhergehenden Ansprüche, welche enthält:

(1) pro 100 Gewichtsteile aktiven Materials A+B+C,

(A) 85 bis 96 Gewichtsteile des aktiven Kathodenmaterials der Struktur $LiM_mO_{2m}$ worin $M_m$ Ni, Co oder Mn ist, wenn m 1 beträgt, oder $Mn_2$, wenn m 2 beträgt,
(B) 8 bis 1 Gewichtsteile des pulverigen leitfähigen Füllmittels,
(C) 7 bis 3 Gewichtsteile des Polymerbindemittels, und
(D) ein Lösungsmittel des Bindemittels in solcher Menge, dass das gewichtsanalytische Verhältnis D/A+B+C+D zwischen 0,3 und 0,7 liegt, und

(2) das Salz, das sich aus der Reaktion von freiem Lithin (LiOH) mit

(E) der organischen Säure, welche in einer Menge entsprechend einem Neutralisationsgrad (TN) größer oder gleich 50% eingreift,

ergibt.

**24.** Tintenzusammensetzung nach einem der Ansprüche 1 bis 22, welche enthält:

(1) für die Grundmischung A+B+C+D:

(A) wenigstens 86 Gewichts-%, in Bezug auf das Gewicht der Mischung A+B+C, aktives Kathodenmaterial der Struktur $LiM_mO_{2m}$ worin $M_m$ Ni, Co oder Mn ist, wenn m 1 beträgt, oder $Mn_2$, wenn m 2 beträgt,
(B) wenigstens 8 Gewichts-%, in Bezug auf das Gewicht der Mischung A+B+C, pulverigen leitfähigen Füllstoff,
(C) wenigstens 6 Gewichts-%, in Bezug auf das Gewicht der Mischung A+B+C, Polymerbindemittel, und
(D) das Lösungsmittel des Bindemittels in ausreichender Menge damit die Mischung A+B+C+D+E bei Luftdruck und Umgebungstemperatur eine zwischen 2 und 20 Pa.s liegende Viskosität aufweist, und

(2) das Salz, gewonnen aus der Reaktion von freiem Lithin (LiOH) mit

(E) der organischen Säure, welche in einer Menge entsprechend einem Neutralisationsgrad (TN) größer oder gleich 50% eingreift.

**25.** Tintenzusammensetzung nach Anspruch 24, bei welcher das Lösungsmittel in ausreichender Menge verwendet wird damit die Mischung A+B+C+D+E bei Luftdruck und Umgebungstemperatur eine zwischen 5 und 7 Pa.s liegende Viskosität aufweist.

**26.** Tintenzusammensetzung nach einem der Ansprüche 23 bis 25, bei welcher der leitfähige pulverige Füllstoff eine Mischung aus Graphit/Acetylenschwarz (AB) gemäß einem gewichtsanalytischen Verhältnis von 4/1 bis 1/4 ist.

**27.** Tintenzusammensetzung nach einem der vorhergehenden Ansprüche, welche in Luft eine Topflebensdauer größer oder gleich 24 Std. aufweist.

**28.** Tintenzusammensetzung nach einem der vorhergehenden Ansprüche, welche unter Luftausschluss eine Topflebensdauer größer oder gleich 72 Std. aufweist.

**29.** Verfahren zur Herstellung einer positiven Elektrode, welches die Herstellung einer Tintenzusammensetzung mit der Erstellung einer Grundmischung, gebildet aus (A) einem aktiven Kathodenmaterial der Struktur $LiM_mO_{2m}$ worin $M_m$ Ni, Co oder Mn ist, wenn m 1 beträgt, oder $Mn_2$ ist, wenn m 2 beträgt, (B) einem leitfähigen Füllstoff, (C) einem Polymerbindemittel und (D) einem Lösungsmittel, umfasst, **dadurch gekennzeichnet, dass** es die Zugabe (E) einer organischen Säure, gewählt aus der Gruppe, bestehend aus

($\alpha$) Carboxylsäuren mit $C_1$-$C_4$,
($\beta$) Fluorcarboxylsäuren mit $C_2$-$C_4$,
($\gamma$) deren Anhydride,
($\delta$) deren Mischungen

vor, nach oder zur gleichen Zeit wie das Lösungsmittel umfasst.

**30.** Verfahren nach Anspruch 29, welches

(i) zum Gewinnen der Tinte:

- einerseits

a) die Lösung des Bindemittels in dem Lösungsmittel mit der organischen Säure,
b) die Zugabe des aktiven Kathodenmaterials $LiM_mO_{2m}$ und eines pulverigen leitfähigen Füllstoffs zur sich ergebenden Lösung,
c) die Homogenisierung der sich ergebenden Mischung, oder

- andererseits

a') das Gewinnen einer Mischung des aktiven Kathodenmaterials $LiM_mO_{2m}$, des pulverigen leitfähigen Füllstoffs, und des Bindemittels als Pulver,
b') die Zugabe der organischen Säure vor, zur gleichen Zeit, oder unmittelbar nach dem Lösungsmittel zu der sich ergebenden Mischung, und
(c') die Homogenisierung der sich ergebenden Mischung, dann

(ii) zum Gewinnen des Überzugs aus aktivem Material:

(d) das Abscheiden durch Beschichten der so gewonnenen homogenen Mischung auf den Träger, und
(e) die Trocknung bei einer Temperatur von 100 bis 200°C um das Lösungsmittel zu entfernen.

umfasst.

**31.** Verfahren nach einem der Ansprüche 29 und 30, welches die Herstellung einer Mischung aus:

(A) 86 Gewichts-% des aktiven Kathodenmaterials, in Bezug auf das Gewicht der Mischung A+B+C,
(B) 8 Gewichts-% des pulverigen leitfähigen Füllstoffs, in Bezug auf das Gewicht der Mischung A+B+C,
(C) 6 Gewichts-% des Polymerbindemittels, in Bezug auf das Gewicht der Mischung A+B+C, wobei das Bindemittel das Homopolymer PVDF oder das Kopolymer VF2/HFP ist,

dann das Einbringen in die sich ergebende Mischung von:

(D) dem Lösungsmittel des Polymerbindemittels, und
(E) der organischen Säure, wobei die organische Säure in einer Menge verwendet wird, die einem Neutralisationsgrad (TN) von 100 bis 150% entspricht und zur gleichen Zeit wie das Lösungsmittel des Polymers in einer solchen Menge eingebracht wird, dass die Mischung A+B+C+D+E bei Luftdruck und Umgebungstemperatur eine Viskosität von 2-20 Pa s hat,

umfasst.

**32.** Verfahren nach Anspruch 31, bei welchem das Lösungsmittel N-Methylpyrrolidon (NMP) ist.

**33.** Verwendung einer organischen Säure zum Hemmen der Gelierung einer Tinte zur Herstellung einer positiven Elektrode, wobei die organische Säure aus der Gruppe, bestehend aus:

(α) Carboxylsäuren mit $C_1$-$C_4$,
(β) Fluorcarboxylsäuren mit $C_2$-$C_4$,
(γ) deren Anhydride,
(δ) deren Mischungen

gewählt ist.

## Claims

**1.** An ink composition for fabricating a positive electrode, said composition comprising, (A) a cathode active substance of structure $LiM_mO_{2m}$, where $M_m$ is Ni, Co, or Mn when m is equal to 1 or $Mn_2$ when m is equal to 2, (B) a filler in powder form, (C) a polymer binder, and (D) a solvent, said composition being **characterized in that** it is essentially exempt from free lithium hydroxide (LiOH), and it contains a lithium salt resulting from the reaction between the lithium hydroxide initially present in said cathode active substance, and (E) an organic acid compound chosen from the set constituted by:

(α) $C_1$-$C_4$ carboxylic acids;
(β) $C_2$-$C_4$ fluorocarboxylic acids;
(γ) anhydrides thereof; and
(δ) mixtures thereof.

**2.** An ink composition according to claim 1, in which the free lithium hydroxide (LiOH) content is less than 50 ppm relative to the weight of said cathode active substance.

**3.** An ink composition according to claim 2, in which the free lithium hydroxide (LiOH) content is less than or equal to 10 ppm relative to the weight of said cathode active substance.

**4.** An ink composition according to claim 3, in which the free lithium hydroxide (LiOH) content is less than or equal to 1 ppm relative to the weight of said cathode active substance.

**5.** An ink composition according to any preceding claim, in association with:

(1) the main mixture constituted by:

(A) the cathode active substance;
(B) the conductive filler in powder form;
(C) the polymer binder; and
(D) the solvent for said binder;

the ink contains:
(2) the lithium salt resulting from the reaction between:

(E) the organic acid compound; and

the free lithium hydroxide (LiOH) present in said cathode active substance, so that said ink composition is substantially exempt from free lithium hydroxide;
said organic acid compound having been used in a quantity such that the neutralization rate (NR), expressed in percentage and given by the following relationship:

$$NR = 100 \frac{1}{q} \frac{M_{COOH}}{M_{LiOH}}$$

where

$M_{LiOH}$ is the initially present free lithium hydroxide content, expressed in molar terms;
$M_{COOH}$ is the organic acid compound content, expressed in molar terms; and
q is the number of carboxylic acid functions per molecule of said organic acid compound;

is greater than or equal to 50%.

**6.** An ink composition according to claim 5, in which the neutralization rate (NR) is greater than or equal to 100%.

**7.** An ink composition according to claim 6, in which the neutralization rate (NR) lies in the range 100% to 150%.

**8.** An ink composition according to any preceding claim, in which said organic acid compound is a $C_1$-$C_4$ monocarboxylic acid or a $C_2$-$C_4$ polycarboxylic acid.

**9.** An ink composition according to any one of claims 1 to 7, in which said organic acid compound is a $C_2$-$C_4$ fluoromonocarboxylic acid or a $C_2$-$C_4$ fluoropolycarboxylic acid.

**10.** An ink composition according to claim 9, in which said organic acid compound is perfluorinated.

**11.** An ink composition according to any one of claims 1 to 7, in which said organic acid compound is chosen from oxalic acid, formic acid, or acetic anhydride.

**12.** An ink composition according to any one of claims 1 to 7, in which said organic acid compound is acetic acid or trifluoroacetic acid.

**13.** An ink composition according to any preceding claim, in which said binder is a polymer or a copolymer of at least one ethylenically unsaturated monomer.

**14.** An ink composition according to claim 13, in which said ethylenically unsaturated monomer compound is halogen.

**15.** An ink composition according to claim 13 or 14, in which said binder is a polymer or a copolymer of at least one monomer which is vinylidene fluoride (VF2).

**16.** An ink composition according to claim 15, in which said binder is chosen from the set constituted by:

· a polyvinylidene fluoride (PVDF) homopolymer;
· a copolymer of vinylidene fluoride and of an ethylenically unsaturated halogen-containing monomer compound; and
· mixtures thereof.

**17.** An ink composition according to claim 16, in which said ethylenically unsaturated halogen-containing monomer compound is fluorinated and satisfies the following formula:

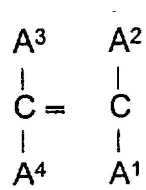

where $A^1$, $A^2$, $A^3$, and $A^4$, which are identical or different, represent H, F, $C_1$-$C_4$ alkyl, or $C_1$-$C_4$ fluoroalkyl.

**18.** An ink composition according to claim 17, in which $A^1 = CF_3$ or $CF_3CF_2$, $A^2 = A^3 = F$, and $A^4 = F$ or $CF_3$.

**19.** An ink composition according to any one of claims 16 to 18, in which said ethylenically unsaturated halogen-containing monomer compound is hexafluoropropylene (HFP).

**20.** An ink composition according to any preceding claim, in which said solvent satisfies the following formula:

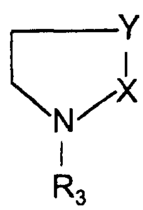

in which $R_3$ is $CH_3$, and one of X and Y is C=O and the other is $CH_2$ or $CH_2CH_2$.

**21.** An ink composition according to claim 20, in which said solvent is N-methylpyrrolidone (NMP).

**22.** An ink composition according to any preceding claim, in which said conductive filler in powder form is chosen from graphite, carbon black, acetylene black (AB), soot, or a mixture thereof.

**23.** An ink composition according to any preceding claim, containing:

(1) for 100 parts by weight of active material A+B+C:

(A) 85 parts by weight to 96 parts by weight of cathode active substance of structure $LiM_mO_{2m}$, where $M_m$ is Ni, Co, or Mn when $\underline{m}$ is equal to 1 or $Mn_2$ when $\underline{m}$ is equal to 2;
(B) 8 parts by weight to 1 part by weight of conductive filler in powder form;
(C) 7 parts by weight to 3 parts by weight of polymer binder; and

(D) a solvent of said binder in a quantity such that the weight ratio D/A+B+C+D lies in the range 0.3 to 0.7; and

(2) the salt resulting from the reaction between the free lithium hydroxide (LiOH) and

(E) said organic acid compound in a quantity corresponding to neutralization rate (NR) greater than or equal to 50%.

**24.** An ink composition according to any one of claims 1 to 22, containing:

(1) for the main mixture A+B+C+D:

(A) at least 86% by weight, relative to the weight of the mixture A+B+C, of cathode active substance of structure $LiM_mO_{2m}$, where $M_m$ is Ni, Co, or Mn when m is equal to 1 or $Mn_2$ when m is equal to 2;
(B) no more than 8% by weight, relative to the weight of the mixture A+B+C, of conductive filler in powder form;
(C) no more than 6% by weight, relative to the weight of the mixture A+B+C, of polymer binder; and
(D) the solvent of said binder in a quantity sufficient for the mixture A+B+C+D+E to have viscosity lying in the range 2 Pa.s to 20 Pa.s under atmospheric pressure and at ambient temperature; and

(2) the salt resulting from the reaction between the free lithium hydroxide and

(E) said organic acid compound in a quantity corresponding to an NR greater than or equal to 50%.

**25.** An ink composition according to claim 24, in which said solvent is used in a quantity sufficient for the mixture A+B+C+D+E to have viscosity lying in the range 5 Pa.s to 7 Pa.s under atmospheric pressure and at ambient temperature.

**26.** An ink composition according to any one of claims 23 to 25, in which said conductive filler in powder form is a graphite/acetylene black (AB) mixture in a weight ratio lying in the range 4/1 to 1/4.

**27.** An ink composition according to any preceding claim, which composition has a pot-life greater than or equal to 24 hours in air.

**28.** An ink composition according to any preceding claim, which composition has a pot-life greater than or equal to 72 hours when protected from air.

**29.** A method of fabricating a positive electrode, said method involving preparing an ink composition, and involving making a main mixture constituted (A) by a cathode active substance of structure $LiM_mO_{2m}$, where $M_m$ is Ni, Co, or Mn when $\underline{m}$ is equal to 1 or $Mn_2$ when $\underline{m}$ is equal to 2, (B) by a conductive filler, (C) by a polymer binder, and (D) by a solvent, said method being **characterized in that** it involves adding (E) an organic acid compound chosen from the set constituted by:

($\alpha$) $C_1$-$C_4$ carboxylic acids;
($\beta$) $C_2$-$C_4$ fluorocarboxylic acids;
($\gamma$) anhydrides thereof; and
($\delta$) mixtures thereof;

before, after, or at the same time as the solvent.

**30.** A method according to claim 29, involving:

(i) for obtaining the said ink:

- either:

(a) dissolving the binder in the solvent with the organic acid compound;
(b) adding the cathode active substance $LiM_mO_{2m}$ and a conductive filler in powder form to the resulting solution; and
(c) homogenizing the resulting mixture;

- or:

(a') obtaining a mixture of the cathode active substance $LiM_mO_{2m}$, of the conductive filler in powder form, and of the binder in powder form;
(b') adding the organic acid compound to the resulting mixture before, at the same time as, or immediately after the solvent; and
(c) homogenizing the resulting mixture;

- then:

(ii) for obtaining the coating of active material:

(d) coating the support with the resulting homogeneous mixture; and
(e) drying at a temperature in the range 100°C to 200°C to remove said solvent.

**31.** A method according to claim 29 or 30, involving preparing a mixture of:

(A) 86% by weight of cathode active substance, relative to the weight of the mixture A+B+C;
(B) 8% by weight, relative to the weight of the mixture A+B+C; and
(C) 6% by weight of polymer binder, relative to the weight of the mixture A+B+C, said binder being PVDF homopolymer or VF2/HFP copolymer; and
then incorporating the following into the resulting mixture:
(D) the solvent of said polymer binder; and
(E) said organic acid compound, said organic acid compound being used in a quantity corresponding to neutralization rate (NR) in the range 100% to 150%, and incorporated at the same time as the solvent of the polymer in a quantity such that the mixture A+B+C+D+E has a consistency in the range 2 Pa.s to 20 Pa.s under atmospheric pressure and at ambient temperature.

**32.** A method according to claim 31, in which said solvent is N-methylpyrrolidone (NMP).

**33.** Use of an organic acid compound for delaying the thickening of an ink for fabricating a positive electrode, said organic acid compound being chosen from the set constituted by:

(α) $C_1$-$C_4$ carboxylic acids;
(β) $C_2$-$C_4$ fluorocarboxylic acids;
(γ) anhydrides thereof; and
(δ) mixtures thereof.